# EUROPÄISCHE PATENTSCHRIFT

(11) **EP 2 874 849 B1**
(45) Veröffentlichungstag und Bekanntmachung des Hinweises auf die Patenterteilung: **16.01.2019**
(21) Anmeldenummer: 13731736.8
(22) Anmeldetag: 20.06.2013
(51) Int. Cl.: B60N 2/60, B60N 2/58

(54) **FAHRZEUGSITZ MIT EINEM BEZUG**
VEHICLE SEAT COMPRISING A COVER
SIÈGE DE VÉHICULE POURVU D'UN REVÊTEMENT

(30) Priorität: 20.07.2012 DE 102012014378; 27.09.2012 DE 102012018986
(43) Veröffentlichungstag der Anmeldung: 27.05.2015
(73) Patentinhaber: Adient Luxembourg Holding S.à r.l., 1855 Luxembourg (LU)
(72) Erfinder: SCHITTKO, Andreas, 6220 Uitenhage (ZA)
(74) Vertreter: Kutzenberger Wolff & Partner
(86) Internationale Anmeldenummer: PCT/EP2013/062930
(87) Internationale Veröffentlichungsnummer: WO 2014/012740

(56) Entgegenhaltungen:
- WO-A1-2011/102951
- DE-A1- 3 926 421
- DE-A1-102007 053 009
- DE-B3-102004 020 913
- DE-T2- 69 905 643
- US-A- 5 799 970

## Beschreibung

Die vorliegende Erfindung betrifft einen Fahrzeugsitz mit einem Polster, der einen Bezug und eine Seitenabdeckung aufweist.

Derartige Fahrzeugsitze sind aus dem Stand der Technik hinlänglich bekannt. So zeigt die DE 69905643 einen Fahrzeugsitz mit einem Polster, der einen Bezug und eine Seitenabdeckung aufweist, wobei im Randbereich des Bezuges zumindest abschnittsweise ein Versteifungsstreifen vorgesehen ist, der in einem Spalt zwischen dem Polster und der Seitenabdeckung angeordnet ist. Bei diesen Fahrzeugsitzen ist es jedoch immer wieder problematisch, den Bezug an dem Fahrzeugsitz in einer einfachen jedoch ästhetisch ansprechenden Weise zu befestigen.

Es war deshalb die Aufgabe der vorliegenden Erfindung einen Fahrzeugsitz zur Verfügung zu stellen, bei dem in einfacher Weise ein Bezug an dem Fahrzeugsitz befestigt werden kann und der hohen ästhetischen Ansprüchen genügt.

Gelöst wird die Aufgabe mit einem Fahrzeugsitz mit den Merkmalen des Anspruchs 1.

Der erfindungsgemäße Fahrzeugsitz ist optisch ansprechend und einfach zu fertigen. Das Polster weist nur wenige oder keine sichtbaren Nähte im Randbereich auf. Vorzugsweise bedarf es keiner zusätzlichen Befestigungsmittel. Der Bezug passt sich der Polsterung perfekt an. Der Bezug kann sehr exakt auf dem Polster positioniert werden.

Die vorliegende Erfindung betrifft einen Fahrzeugsitz, dessen Sitzteil und/oder Rückenlehne ein Polster, beispielsweise ein Schaumstoffpolster, aufweist, das mit einem Bezug beispielsweise aus Stoff und/oder Leder überzogen ist. Des Weiteren weist die Rückenlehne und/oder das Sitzteil jeweils eine Seitenabdeckung auf, die jeweils den Rahmen des Sitzteils und/oder der Rückenlehne zumindest teilweise verdeckt und die das Polster jeweils im Seitenbereich teilweise überdeckt.

Vorzugsweise ist der Versteifungsstreifen ein Kunststoffstreifen, Papstreifen und/oder Ölpapierstreifen. Vorzugsweise hat der Querschnitt des Versteifungsstreifens die Form eines halben Pfeils. Vorzugsweise steht der Versteifungsstreifen über den Rand des Bezuges hinaus. Der Versteifungsstreifen kann mit dem Rand des Bezuges auf jede dem Fachmann geläufige Art und Weise verbunden werden. Vorzugsweise wird der Versteifungstreifen jedoch mit mindestens einer oder mehreren Nähten mit dem Rand des Bezuges verbunden. Vorzugsweise läuft die Naht parallel zu dem Rand des Bezuges. Vorzugsweise ist der Verstärkungsstreifen so flexibel ausgeführt, dass er sich der Form des Polsters anpasst.

Vorzugsweise weist der Bezug in seinem Randbereich eine Falte auf. Diese Falte erstreckt sich vorzugsweise entlang des Endes des Versteifungsstreifen, das von dem Bezug verdeckt wird.

Erfindungsgemäß ist zwischen dem Polster, beispielsweise einem Schaumstoffpolster, und der Seitenabdeckung ein Spalt vorgesehen. Vorzugsweise ist die Form des Polster und/oder der Seitenabdeckung so aufeinander abgestimmt, dass der Spalt eine im Wesentlichen konstante Breite aufweist. Dieser Spalt nimmt den Randbereich des Bezuges und den Versteifungsstreifen auf und befestigt dadurch den Bezug zwischen dem Polster und der Seitenabdeckung. Insbesondere klemmt sich der Versteifungsstreifen in dem Spalt fest.

Vorzugsweise wird der Bezug an dem Polster befestigt, indem der Bezug auf das Polster aufgezogen und dann der Randbereich des Bezuges um das vom dem Bezug verdeckte Ende geklappt und dabei oder anschließend in den Spalt eingeführt wird. Der Versteifungsstreifen wird vorzugsweise nur in den Spalt eingesteckt. Eine weitere Befestigung erfolgt vorzugsweise nicht. Alternativ wird erst das Polster mit dem Bezug überzogen, der Versteifungsstreifen umgeklappt und danach die Seitenabdeckung montiert.

Erfindungsgemäß ist an dem Randbereich des Bezuges und/oder an dem Versteifungsstreifen eine Kaschierung vorgesehen, die aus demselben Material wie der Bezug oder aus einem unterschiedlichen Material gefertigt sein kann. Die Kaschierung kann aus optischen Gründen vorgesehen werden und/oder um dem Verstärkungsstreifen in dem Spalt mehr Halt zu geben. Erfindungegemäß dient die Kaschierung zu einer zusätzlichen Klemmung des Versteifungsstreifens in dem Spalt. Vorzugsweise ist die Kaschierung aus einem teppich-ähnlichem Material gefertigt. Erfindungsgemäß ist die Kaschierung zur Geräuschminderung vorgesehen, beispielsweise beim Verstellen der Rückenlehne relativ zu dem Sitzteil und/oder während der Fahrt des Fahrzeuges, in dem der erfindungsgemäße Fahrzeugsitz vorgesehen ist.

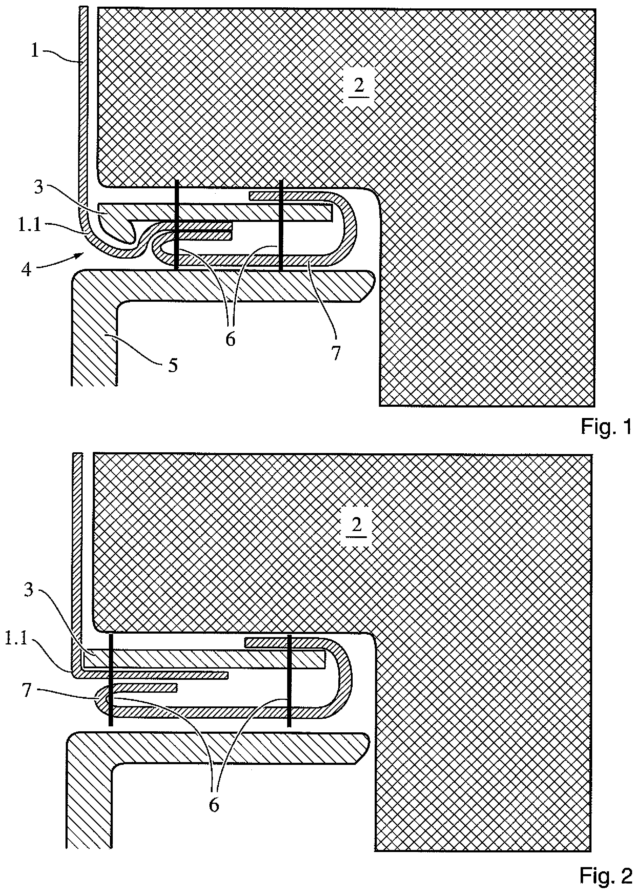

Im Folgenden wird die Erfindung anhand der Figuren 1 und 2 erläutert. Diese Erläuterungen sind lediglich beispielhaft und schränken den allgemeinen Erfindungsgedanken nicht ein.
Figur 1 zeigt eine erste Ausführungsform des Polsters des erfindungsgemäßen Fahrzeugsitzes.
Figur 2 zeigt eine zweite Ausführungsform des Polsters des erfindungsgemäßen Fahrzeugsitzes.

Figur 1 zeigt schematisch das Polster 2 eines Fahrzeugsitzes, das zumindest teilweise von einer Seitenabdeckung 5 umgeben ist. Das Polster und ggf. Teile des Rahmens des Fahrzeugsitzes sind mit einem Bezug 1 bezogen. Dieser Bezug 1 weist in seinem Randbereich einen Plastikstreifen 3 auf, der in dem vorliegendem Fall den Querschnitt eine halben Pfeils hat. Der Versteifungsstreifen 3 ist so am Rand des Bezuges angeordnet, dass seins eines Ende über den Rand des Bezuges hinaus steht und sein anderes Ende, hier die halbe Pfeilspitze von dem Bezug verdeckt wird. In dem vorliegenden Fall sind der Bezug und der Versteifungsstreifen 3 mit einer Naht 6 miteinander verbunden, die parallel zu dem Rand des Bezuges verläuft. Erfindungsgemäß ist im Randbereich des Bezuges 1 noch eine Kaschierung 7 vorgesehen, die aus demselben Material wie der Bezug oder einem anderen Material gefertigt sein kann. Diese Kaschierung 7 ist durch eine Naht mit dem Versteifungsstreifen 3 und dem Bezug 1 und durch eine weitere Naht 6 mit dem Versteifungsstreifen 3 verbunden. Der Bezug 1 wird an der Polsterung 2 angeordnet, indem der Bezug 1 zunächst über das Polster gezogen wird. Anschließend wird die Versteifung 3 um die Falte 1.1 geklappt und in einen Spalt 4, der sich zwischen dem Polster 2 und der Seitenabdeckung 5 befindet, eingesteckt. Dabei spannt sich der Versteifungsstreifen in dem Spalt ein und entfernt sich dadurch aus diesem nicht mehr selbsttätig. In dem vorliegenden Fall wird die Klemmung in dem Spalt noch durch die Kaschierung 7 verbessert, die den Spalt zusätzlich ausfüllt und auch zu einer zusätzlichen Reibung zwischen dem Polster 2 und/oder dem Seitenteil 5 führen kann. Die halbe Pfeilspitze des Versteifungsstreifens 3 sorgt dafür, dass eine gerundete und somit ästhetisch ansprechende Kante des Bezugs 1 im Bereich der Pfeilspitze entsteht und/oder die Naht verdeckt wird, die hinter dem halben Pfeil verläuft.

Figur 2 zeigt im Wesentlichen die Ausführungsform gemäß Figur 1, wobei in dem vorliegenden Fall der Versteifungsstreifen 3 einen rechteckigen Querschnitt aufweist. Darüber hinaus sind in dem vorliegenden Fall die Nähte 6 etwas weiter auseinander gerückt. Ansonsten wird auf die Ausführungsform gemäß Figur 1 Bezug genommen. In Figur 2 weist der Versteigungsstreifen 3 keine halbe Pfeilspitze auf, so dass eine nahezu rechtwinklige Kante des Bezugs 2 im Bereich des Versteifungsstreifens 3 entsteht. Vorteilhafterweise kann somit über die Form des Endbereichs des Versteifungsstreifens 3 die sichtbare Kante des Bezugs 1 in gewünschter Weise ausgebildet werden.

### Bezugszeichenliste:

- 1: Bezug
- 1.1: Falte
- 2: Polsterung
- 3: Versteifungsstreifen, Plastikstreifen, Streifen mit dem Querschnitt eines halben Pfeils
- 4: Spalt
- 5: Abdeckung, Seitenabdeckung
- 6: Naht
- 7: Kaschierung

## Patentansprüche

1. Fahrzeugsitz mit einem Polster (2), der einen Bezug (1) und eine Seitenabdeckung (5) aufweist, wobei im Randbereich des Bezuges (1) zumindest abschnittsweise ein Versteifungsstreifen (3) vorgesehen ist, der in einem Spalt (4) zwischen dem Polster (2) und der Seitabdeckung (5) angeordnet ist, **dadurch gekennzeichnet, dass** an dem Randbereich des Bezuges (1) und/oder an dem Versteifungsstreifen (3) eine Kaschierung (7) vorgesehen ist, die aus demselben Material wie der Bezug (1) oder aus einem unterschiedlichen Material gefertigt ist, wobei die Kaschierung (7) durch eine Naht (6) mit dem Versteifungsstreifen (3) und dem Bezug (1) und durch eine weitere Naht (6) mit dem Versteifungsstreifen (3) verbunden ist, wobei die Kaschierung (7) für eine zusätzliche Klemmung des Versteifungsstreifens (3) in dem Spalt (4) und zur Geräuschminderung vorgesehen ist.

2. Fahrzeugsitz nach Anspruch 1, **dadurch gekennzeichnet, dass** der Versteifungsstreifen (3) aus einem stabilen Material, vorzugsweise als Kunststoffstreifen, Papstreifen oder als Ölpapierstreifen gefertigt ist.

3. Fahrzeugsitz nach einem der voranstehenden Ansprüche, **dadurch gekennzeichnet, dass** der Querschnitt des Versteifungsstreifens die Form eines halben Pfeils hat.

4. Fahrzeugsitz nach einem der voranstehenden Ansprüche, **dadurch gekennzeichnet, dass** der Versteifungsstreifen über den Rand des Bezuges hinaus steht.

5. Fahrzeugsitz nach einem der voranstehenden Ansprüche, **dadurch gekennzeichnet, dass** der Versteifungstreifen (3) mit mindestens einer oder mehreren Nähten mit dem Rand des Bezuges verbunden ist, wobei die Naht vorzugsweise parallel zu dem Rand des Bezuges verläuft.

6. Fahrzeugsitz nach einem der voranstehenden Ansprüche, **dadurch gekennzeichnet, dass** der Verstärkungsstreifen so flexibel ausgeführt ist, dass er sich der Form des Polsters anpasst.

7. Fahrzeugsitz nach einem der voranstehenden Ansprüche, **dadurch gekennzeichnet, dass** der Bezug in seinem Randbereich eine Falte (1.1) aufweist, die sich vorzugweise entlang des Endes des Versteifungsstreifen erstreckt, das von dem Bezug verdeckt wird.

8. Fahrzeugsitz nach einem der voranstehenden Ansprüche, **dadurch gekennzeichnet, dass** der Spalt eine im Wesentlichen konstante Breite aufweist.

## Claims

1. Vehicle seat comprising a cushion (2) which has a cover (1) and a side covering (5), wherein a reinforcing strip (3) is provided at least in sections of the edge region of the cover (1) and is arranged in a gap (4) between the cushion (2) and the side covering (5), **characterized in that** a lamination (7) which is manufactured from the same material as the cover (1) or from a different material is provided on the edge region of the cover (1) and/or on the reinforcing strip (3), wherein the lamination (7) is connected to the reinforcing strip (3) and to the cover (1) by a seam (6) and to the reinforcing strip (3) by a further seam (6), wherein the lamination (7) is provided for additionally clamping the reinforcing strip (3) in the gap (4), and in order to reduce noise.

2. Vehicle seat according to Claim 1, **characterized in that** the reinforcing strip (3) is manufactured from a stable material, preferably in the form of a plastics strip, cardboard strip or oiled paper strip.

3. Vehicle seat according to either of the preceding claims, **characterized in that** the cross section of the reinforcing strip is in the form of a half arrow.

4. Vehicle seat according to one of the preceding claims, **characterized in that** the reinforcing strip projects beyond the edge of the cover.

5. Vehicle seat according to one of the preceding claims, **characterized in that** the reinforcing strip (3) is connected to the edge of the cover by at least one or more than one seam, wherein the seam preferably runs parallel to the edge of the cover.

6. Vehicle seat according to one of the preceding claims, **characterized in that** the reinforcing strip is designed to be of such flexibility that it adapts to the shape of the cushion.

7. Vehicle seat according to one of the preceding claims, **characterized in that** the edge region of the cover has a fold (1.1) which preferably extends along that end of the reinforcing strip which is covered by the cover.

8. Vehicle seat according to one of the preceding claims, **characterized in that** the gap has substantially constant width.

## Revendications

1. Siège de véhicule avec un rembourrage (2) qui présente un revêtement (1) et un recouvrement latéral (5), une bande de renforcement (3) étant prévue au moins en partie dans la région de bord du revêtement (1), laquelle est disposée dans une fente (4) entre le rembourrage (2) et le recouvrement latéral (5), **caractérisé en ce qu'**une doublure (7) est prévue au niveau de la région de bord du revêtement (1) et/ou au niveau de la bande de renforcement (3), laquelle est fabriquée à partir du même matériau que le revêtement (1) ou à partir de matériau différent, la doublure (7) étant connectée par une couture (6) à la bande de renforcement (3) et au revêtement (1) et par une couture supplémentaire (6) à la bande de renforcement (3), la doublure (7) étant prévue pour un serrage supplémentaire de la bande de renforcement (3) dans la fente (4) et pour réduire le bruit.

2. Siège de véhicule selon la revendication 1, **caractérisé en ce que** la bande de renforcement (3) est fabriquée à partir d'un matériau stable, de préférence à partir de bandes de plastique, de bandes de carton ou sous forme de bandes de papier huilé.

3. Siège de véhicule selon l'une quelconque des revendications précédentes, **caractérisé en ce que** la section transversale de la bande de renforcement présente la forme d'une demi-flèche.

4. Siège de véhicule selon l'une quelconque des revendications précédentes, **caractérisé en ce que** la bande de renforcement dépasse au-delà du bord du revêtement.

5. Siège de véhicule selon l'une quelconque des revendications précédentes, **caractérisé en ce que** la bande de renforcement (3) est connectée par au moins une ou plusieurs coutures au bord du revêtement, la couture s'étendant de préférence parallèlement au bord du revêtement.

6. Siège de véhicule selon l'une quelconque des revendications précédentes, **caractérisé en ce que** la bande de renforcement est réalisée de manière suffisamment flexible pour s'adapter à la forme du rembourrage.

7. Siège de véhicule selon l'une quelconque des revendications précédentes, **caractérisé en ce que** le revêtement présente, dans sa région de bord, un pli (1.1) qui s'étend de préférence le long de l'extrémité de la bande de renforcement qui est recouverte par le revêtement.

8. Siège de véhicule selon l'une quelconque des revendications précédentes, **caractérisé en ce que** la fente présente une largeur sensiblement constante.
